# FASCICULE DE BREVET EUROPEEN

(11) **EP 4 242 479 B1**
(45) Date de publication et mention de la délivrance du brevet: **18.12.2024**
(21) Numéro de dépôt: 23159850.9
(22) Date de dépôt: 03.03.2023
(51) Int. Cl.: F16C 7/06

(54) **BIELLE RÉGLABLE EN LONGUEUR COMPRENANT UN SYSTÈME ANTI-ROTATION COOPÉRANT AVEC UN SYSTÈME DE LIAISON DE LA BIELLE, AÉRONEF COMPRENANT AU MOINS UNE TELLE BIELLE**
LÄNGENVERSTELLBARE KOPPELSTANGE MIT EINEM VERDREHSICHERUNGSSYSTEM, DAS MIT EINEM VERBINDUNGSSYSTEM DER KOPPELSTANGE ZUSAMMENARBEITET, LUFTFAHRZEUG, DAS MINDESTENS EINE SOLCHE KOPPELSTANGE UMFASST
LONGITUDINALLY ADJUSTABLE CONNECTING ROD COMPRISING AN ANTI-ROTATION SYSTEM COOPERATING WITH A SYSTEM FOR CONNECTING THE CONNECTING ROD, AIRCRAFT COMPRISING AT LEAST ONE SUCH CONNECTING ROD

(30) Priorité: 09.03.2022 FR 2202049
(43) Date de publication de la demande: 13.09.2023
(73) Titulaire: AIRBUS OPERATIONS (S.A.S.), 31060 Toulouse (FR)
(72) Inventeur: BERGERET, Christian, 31060 TOULOUSE (FR)
(74) Mandataire: Fantin, Laurent

(56) Documents cités:
- WO-A1-2012/100794
- DE-U1- 202004 004 407
- US-A1- 2021 054 863
- US-B2- 8 371 767

## Description

La présente demande se rapporte à une bielle réglable en longueur comprenant un système anti-rotation coopérant avec un système de liaison de la bielle ainsi qu'à un aéronef comprenant au moins une telle bielle.

De manière connue, une bielle comprend :
- un corps longiligne qui présente un axe longitudinal,
- une première tête de fixation, positionnée à une première extrémité du corps, comportant un premier trou traversant pour relier la bielle à un premier élément, et
- une deuxième tête de fixation, positionnée à une deuxième extrémité du corps, comportant un deuxième trou traversant pour relier la bielle à un deuxième élément.

Sur le plan fonctionnel, une bielle permet de relier deux éléments en maintenant une distance constante et en assurant la transmission des efforts entre les deux éléments reliés.

Pour la suite de la description, la longueur de la bielle correspond à l'entraxe, séparant les axes des premier et deuxième trous traversants, mesuré au niveau de l'axe longitudinal.

Selon un mode de réalisation de l'art antérieur, pour obtenir une bielle réglable en longueur, la première tête de fixation comprend une tige filetée configurée pour se visser dans un logement taraudé débouchant au niveau de la première extrémité du corps. Ainsi, il est possible de modifier la longueur de la bielle en vissant plus ou moins la tige filetée de la première tête de fixation dans le logement taraudé du corps.

La bielle comprend un système anti-rotation pour immobiliser en rotation la première tête de fixation et le corps l'un par rapport à l'autre afin de conserver inchangée la longueur réglée de la bielle. Une telle bielle est décrite par le document DE202004004407U1. Selon un autre mode de réalisation, le système anti-rotation comprend un contre-écrou se vissant sur la tige filetée jusqu'à venir en contact avec le corps.

Ce mode de réalisation n'est pas pleinement satisfaisant car le contre-écrou peut se dévisser en raison des vibrations et provoquer un déréglage de la longueur de la bielle. De plus, lorsque la bielle présente un diamètre important, le contre-écrou est relativement volumineux et présente une masse importante conduisant à augmenter la masse embarquée.

La présente invention vise à remédier à tout ou partie des inconvénients de l'art antérieur.

A cet effet, l'invention a pour objet une bielle, configurée pour relier des premier et deuxième éléments, comprenant un corps s'étendant entre des première et deuxième extrémités et présentant un axe longitudinal, des première et deuxième têtes de fixation prévues à chaque extrémité du corps ainsi qu'un premier système de liaison configuré pour relier la première tête de fixation au premier élément. Le corps et la première tête de fixation sont distincts, le corps comportant, au niveau de sa première extrémité, une surface extérieure, une face terminale transversale ainsi qu'un logement au moins partiellement taraudé et débouchant au niveau de la face terminale transversale ; la première tête de fixation comportant une extension au moins partiellement filetée pour se visser dans le logement du corps. La bielle comporte un système anti-rotation pour immobiliser en rotation la première tête de fixation par rapport au corps.

Selon l'invention, le système anti-rotation comprend une clé, positionnée à cheval sur la première tête de fixation et le corps, qui présente une première partie coopérant avec le corps de manière à être immobilisée en rotation par rapport au corps ainsi qu'une deuxième partie coopérant avec la première tête de fixation et le premier système de liaison de manière à être immobilisée par rapport à la première tête de fixation. En complément, le premier système de liaison comprend un axe de liaison et la première tête de fixation comprend au moins une plaque qui présente des faces parallèles entre elles ainsi qu'un trou traversant logeant l'axe de liaison. La deuxième partie de la clé est une lame, configurée pour être plaquée contre l'une des faces de la plaque, qui comprend un orifice traversant configuré pour être aligné avec le trou traversant de la plaque et loger l'axe de liaison. La clé comprend une troisième partie, reliant les première et deuxième parties, dimensionnée de manière à ce que les première et deuxième parties soient simultanément en contact respectivement avec la surface extérieure du corps et la plaque de la première tête de fixation. La première tête de fixation comprend une face transversale sensiblement perpendiculaire à l'axe longitudinal sur laquelle est rapportée la plaque, la troisième partie comprenant une face sensiblement plane configurée pour être plaquée contre la face transversale de la première tête de fixation. Cette configuration permet d'obtenir une liaison plus sûre entre le système anti-rotation et la bielle, limitant les risques de déréglage de la longueur de la bielle en raison de phénomènes vibratoires. Selon un autre avantage, le volume et la masse du système anti-rotation ne sont pas étroitement liés au diamètre de la bielle, contrairement à un contre- écrou, ce qui permet de limiter l'impact sur la masse embarquée.

Selon une autre caractéristique, la première partie présente une face configurée pour être orientée vers la surface extérieure du corps et plaquée contre cette dernière, la face de la première partie et la surface extérieure du corps présentant des formes qui coopèrent entre elles de manière à immobiliser en rotation la première partie de la clé par rapport au corps. Selon une autre caractéristique, le système anti-rotation comprend une pluralité de premiers crans positionnés sur un tronçon de la surface extérieure du corps, orientés parallèlement à l'axe longitudinal et répartis sur toute la circonférence de la surface extérieure du corps. En complément, la face de la première partie de la clé présente des deuxièmes crans configurés pour s'imbriquer entre les premiers crans du corps.

Selon une autre caractéristique, les deuxièmes crans ont des formes complémentaires à celles des premiers crans.

Selon une autre caractéristique, les premiers crans s'étendent à partir de la face terminale transversale.

Selon une autre caractéristique, au moins la face de la première partie présente un rayon de courbure sensiblement identique à celui de la surface extérieure du corps.

L'invention a également pour objet un aéronef comprenant au moins une bielle selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une bielle illustrant un mode de réalisation de l'invention,
- La figure 2 est une vue en perspective selon un premier angle de vue d'une première extrémité de la bielle visible sur la figure 1 à l'état démonté, et

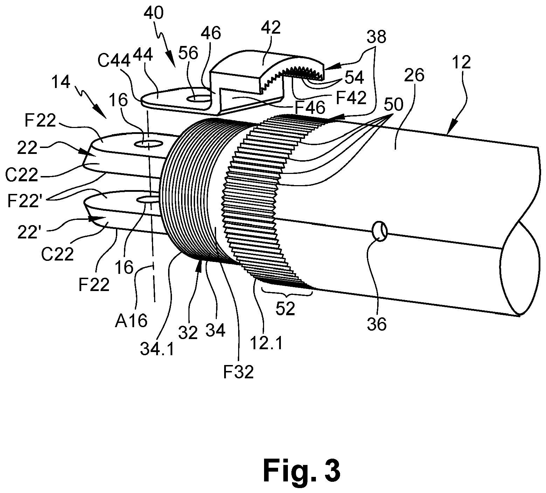

- La figure 3 est une vue en perspective selon un deuxième angle de vue de la première extrémité de la bielle visible sur la figure 1 à l'état démonté.

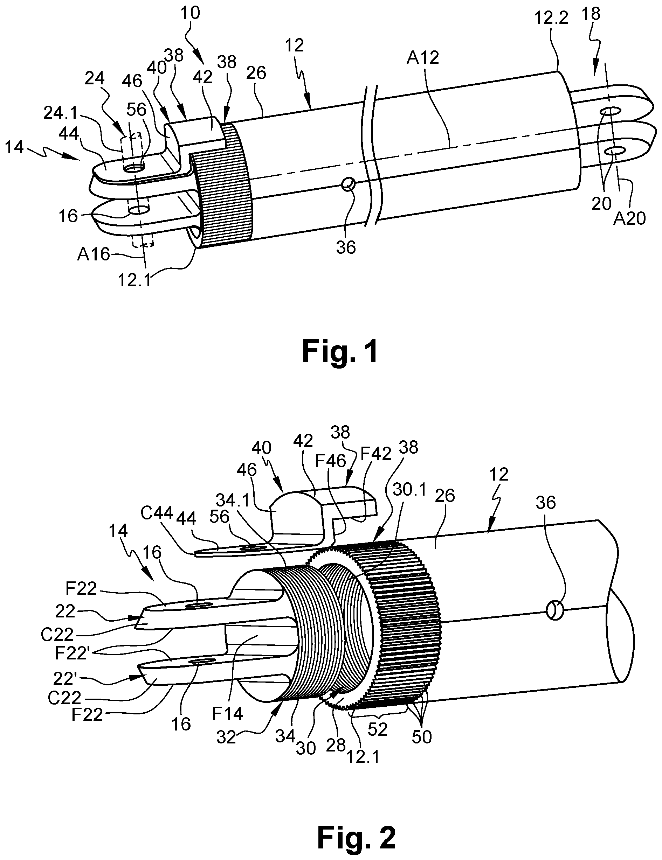

Selon un mode de réalisation visible sur les figures 1 et 2, une bielle 10 comprend :
- un corps 12 qui présente un axe longitudinal A12 et s'étend entre des première et deuxième extrémités 12.1, 12.2,
- une première tête de fixation 14, positionnée au niveau de la première extrémité 12.1 du corps 12, comportant un premier trou traversant 16 qui présente un premier axe A16 sécant à l'axe longitudinal A12, et
- une deuxième tête de fixation 18, positionnée au niveau de la deuxième extrémité 12.2 du corps 12, comportant un deuxième trou traversant 20 qui présente un deuxième axe A20 sécant à l'axe longitudinal A12.

Selon un mode de réalisation, la première tête de fixation 14 comprend au moins une plaque 22 qui présente des faces F22, F22' parallèles entre elles et à l'axe longitudinal A12 ainsi qu'un chant C22. Le premier trou traversant 16 débouche au niveau des faces F22, F22' et le premier axe A16 est sensiblement perpendiculaire aux faces F22, F22'.

Selon une configuration illustrée par la figure 1, la première tête de fixation 14 comprend deux plaques 22, 22', espacées et parallèles entre elles, formant une chape, chaque plaque 22, 22' présentant une première face F22 orientée à l'opposé de l'autre plaque ainsi qu'une deuxième face F22' orientée vers l'autre plaque. Les deux plaques 22, 22' comprennent chacune un trou traversant 16, les trous traversants 16 des deux plaques 22, 22' étant coaxiaux.

Selon une configuration, la première tête de fixation 14 comprend une face transversale F14 sensiblement perpendiculaire à l'axe longitudinal A12 sur laquelle est (sont) rapportée(s) la (ou les) plaque(s) 22, 22'. La face transversale F14 est reliée aux faces F22, F22' et aux chants C22 des plaques 22, 22' par des congés.

La deuxième tête de fixation 18 peut être identique à la première tête de fixation 14. Bien entendu, l'invention n'est pas limitée à ce mode de réalisation pour les têtes de fixation 14, 18.

En fonctionnement, la bielle 10 permet de relier des premier et deuxième éléments en maintenant une distance constante et en assurant la transmission des efforts entre les premier et deuxième éléments reliés par la bielle 10.

Selon une application, un aéronef comprend au moins une bielle 10 pour relier un plancher et une structure de l'aéronef. Bien entendu, l'invention n'est pas limitée à cette application.

La bielle 10 comprend un premier système de liaison 24 configuré pour relier la première de tête de fixation 14 et le premier élément ainsi qu'un deuxième système de liaison configuré pour relier la deuxième tête de fixation 18 et le deuxième élément.

Selon un mode de réalisation, le premier système de liaison 24 comprend un axe de liaison 24.1 (représenté en trait mixte sur la figure 1) pour relier la première tête de fixation 14 avec le premier élément. Cet axe de liaison 24.1 se loge dans le trou traversant 16 de chaque plaque 22, 22' de la première tête de fixation 14. L'axe de liaison 24.1 comprend également deux butées à chacune de ses extrémités pour le maintenir en position.

Selon une configuration, au moins l'un des premier et deuxième trous traversants 16, 20 peut être équipé d'un palier, d'un roulement ou d'une bague coulissante pour obtenir une liaison pivotante entre une des têtes de fixation de la bielle et un axe auquel la bielle est reliée. Lorsque la première tête de fixation 14 comprend une seule plaque 22, le système de liaison 24 comprend une chape, solidaire du premier élément auquel est reliée la bielle 10, pourvue de deux branches entre lesquelles est positionnée la plaque 22. Lorsque la première tête de fixation 14 comprend deux plaques 22, 22', le système de liaison 24 comprend une seule branche, solidaire du premier élément auquel est reliée la bielle 10, positionnée entre les deux plaques 22, 22'.

Le deuxième système de liaison peut être identique au premier système de liaison 24.

Selon une caractéristique, la première tête de fixation14 et le corps 12 sont deux pièces distinctes. Le corps 12 comprend, au niveau de sa première extrémité 12.1, une surface extérieure 26, sensiblement cylindrique et coaxiale à l'axe longitudinal A12, une face terminale transversale 28 sensiblement perpendiculaire à l'axe longitudinal A12 ainsi qu'un logement 30 sensiblement cylindrique, coaxial à l'axe longitudinal A12 et à la surface extérieure 26, débouchant au niveau de la face terminale transversale 28 et configuré pour recevoir partiellement la première tête de fixation 14.

Le logement 30 est au moins partiellement taraudé et présente un taraudage 30.1. Selon une configuration, le taraudage 30.1 s'étend à partir de la face terminale transversale 28 sur toute la longueur du logement 30 ou sur toute sa longueur.

Le logement 30 s'étend sur au moins une partie de la longueur du corps 12. Selon une configuration, le logement 30 s'étend sur toute la longueur du corps 12.

La première tête de fixation 14 comprend une extension 32 cylindrique qui présente un diamètre sensiblement égal à celui du logement 30. Cette extension 32 présente une face latérale 34 et s'étend entre une face terminale transversale F32 et la face transversale F14. L'extension 32 est au moins partiellement filetée pour se visser dans le logement 30 du corps 12. Ainsi, la face latérale 34 de l'extension 32 comprend un filetage 34.1 configuré pour se visser dans le taraudage 30.1 du logement 30 du corps 12.

Ainsi, il est possible d'ajuster la longueur de la bielle 10 en vissant ou dévissant l'extension 32 de la première tête de fixation 14 dans le logement 30 du corps 12.

Selon un mode de réalisation, le corps 12 comprend au moins un orifice transversal 36 utilisé pour faire pivoter ou immobiliser en rotation le corps 12 à l'aide d'un outil, comme une tige traversant le corps 12 via l'orifice transversal 36.

La bielle 10 comprend un système anti-rotation 38 pour immobiliser en rotation la première tête de fixation 14 par rapport au corps 12 afin de conserver inchangée la longueur de la bielle 10 réglée.

Le système anti-rotation 38 comprend une clé 40, positionnée à cheval sur la première tête de fixation 14 et le corps 12, qui présente une première partie 42 configurée pour coopérer avec le corps 12 de manière à être immobilisée en rotation par rapport au corps 12, une deuxième partie 44 configurée pour coopérer avec la première tête de fixation 14 de manière à être immobilisée par rapport à la première tête de fixation 14 ainsi qu'une troisième partie 46 reliant les première et deuxième parties 42, 44.

Les première, deuxième et troisième parties 42, 44, 46 forment une unique et même pièce, la clé 40.

Les première, deuxième et troisième parties 42, 44, 46 ont la même largeur, sensiblement égale à la largeur d'une plaque 22 de la première tête de fixation 14. La largeur de la plaque 22 correspond à la dimension d'une des faces F22 F22' prise perpendiculairement à l'axe longitudinal A12.

Ainsi, la première partie 42 s'étend sur un secteur angulaire de la circonférence du corps 12, de préférence inférieur au tiers de la circonférence du corps.

La première partie 42 présente une face F42 configurée pour être orientée vers la surface extérieure 26 du corps 12 et plaquée contre cette dernière en fonctionnement.

Afin d'optimiser la surface de la première partie 42 en contact avec la surface extérieure 26 du corps 12, au moins la face F42 de la première partie 42 présente un rayon de courbure sensiblement identique à celui de la surface extérieure 26 du corps 12. Selon une configuration, la première partie 42 se présente sous la forme d'une plaque courbe qui présente un rayon de courbure sensiblement identique à celui de la surface extérieure 26 du corps 12.

La face F42 de la première partie 42 et la surface extérieure 26 du corps présentent des formes qui coopèrent entre elles de manière à immobiliser en rotation la première partie 42 de la clé 40 par rapport au corps 12.

A cet effet, le système anti-rotation 38 comprend une pluralité de premiers crans 50 positionnés sur un tronçon 52 de la surface extérieure 26 du corps 12, orientés parallèlement à l'axe longitudinal A12 et répartis sur toute la circonférence de la surface extérieure 26 du corps 12. Ces premiers crans 50 s'étendent à partir de la face terminale transversale 28. Selon un mode de réalisation, le tronçon 52 du corps 12 est cannelé pour former les premiers crans 50.

En complément, la face F42 de la première partie 42 de la clé 40 présente des deuxièmes crans 54 configurés pour s'imbriquer entre les premiers crans 50 du corps 12. Ces deuxièmes crans 54 sont parallèles entre eux et orientés selon une direction parallèle à l'axe longitudinal A12 lorsque la face F42 de la première partie 42 de la clé 40 coopère avec la surface extérieure 26 du corps 12. Ces deuxièmes crans 54 ont des formes complémentaires à celles des premiers crans 50.

La deuxième partie 44 se présente sous la forme d'une lame configurée pour être plaquée contre l'une des faces F22, F22' d'une plaque 22, 22' de la première tête de fixation 14. La deuxième partie 44 présente un chant C44 sensiblement identique à celui du chant C22 de la plaque 22, 22' contre laquelle elle est plaquée. Lorsque la première tête de fixation 14 comprend deux plaques 22, 22', la deuxième partie 44 peut être plaquée indifféremment contre l'une ou l'autre des plaques 22, 22'.

La deuxième partie 44 comprend un orifice traversant 56 configuré pour être aligné avec le trou traversant 16 de la plaque 22, 22' contre laquelle est plaquée la deuxième partie 44 et loger l'axe de liaison 24.1. Cet orifice traversant 56 présente un diamètre sensiblement identique à celui du trou traversant 16 et de l'axe de liaison 24.1.

En fonctionnement, l'axe de liaison 24.1 traverse chaque plaque 22, 22' de la première tête de fixation 14 et la deuxième partie 44 de la clé 40. En complément, la deuxième partie 44 de la clé 40 est positionnée entre la plaque 22, 22' de la première tête de fixation 14 et l'une des butées de l'axe de liaison 24.1 ou l'une des branches de la chape du premier élément auquel est reliée la première tête de fixation 14 par l'axe de liaison 24.1. Ainsi, la deuxième partie 44 de la clé 40 est immobilisée par rapport à la première tête de fixation 14.

Selon un agencement, la troisième partie 46 se présente sous la forme d'une plaque sensiblement perpendiculaire à la deuxième partie 44 et comprend une face F46 sensiblement plane configurée pour être plaquée contre la face transversale F14 de la première tête de fixation 14. Cet agencement favorise le positionnement de la clé 40 par rapport à la première tête de fixation 14 et/ou au corps 12. Cette partie intermédiaire 46 est dimensionnée de manière à ce que les première et deuxième parties 42, 44 soient simultanément en contact respectivement avec la surface extérieure 26 du corps 12 et l'une des plaques 22, 22' de la première tête de fixation 14.

Bien entendu, l'invention n'est pas limitée au mode de réalisation précédemment décrit. Ainsi, la clé 40 pourrait ne pas comprendre de troisième partie 46, les première et deuxième parties 42, 44 étant directement reliées entre elles. De plus, les premiers et deuxième crans 50, 54 ne sont pas les seules formes envisageables pour immobiliser en rotation la première partie 42 de la clé 40 et le corps 12 de la bielle 10.

Quel que soit le mode de réalisation, la deuxième partie 44 du système anti-rotation 38 coopère avec le premier système de liaison 24 et la première tête de fixation 14 afin d'être immobilisée par rapport à cette dernière. Cette configuration permet d'obtenir une liaison plus sûre entre le système anti-rotation 38 et la bielle 10, limitant les risques de déréglage de la longueur de la bielle 10 en raison de phénomènes vibratoires. Selon un autre avantage, le volume et la masse du système anti-rotation 38 ne sont pas étroitement liés au diamètre de la bielle 10, contrairement à un contre- écrou, ce qui permet de limiter l'impact sur la masse embarquée.

## Revendications

1. Bielle configurée pour relier des premier et deuxième éléments, comprenant un corps (12) s'étendant entre des première et deuxième extrémités (12.1, 12.2) et présentant un axe longitudinal (A12), des première et deuxième têtes de fixation (14, 18) prévues à chaque extrémité (12.1, 12.2) du corps (12), un premier système de liaison (24) configuré pour relier la première tête de fixation (14) au premier élément, le corps (12) et la première tête de fixation (14) étant distincts, le corps (12) comportant, au niveau de sa première extrémité (12.1), une surface extérieure (26), une face terminale transversale (28) ainsi qu'un logement (30) au moins partiellement taraudé et débouchant au niveau de la face terminale transversale (28), la première tête de fixation (14) comportant une extension (32) au moins partiellement filetée pour se visser dans le logement (30) du corps (12), la bielle (10) comportant un système anti-rotation (38) pour immobiliser en rotation la première tête de fixation (14) par rapport au corps (12) ; le système anti-rotation (38) comprend une clé (40), positionnée à cheval sur la première tête de fixation (14) et le corps (12), qui présente une première partie (42) coopérant avec le corps (12) de manière à être immobilisée en rotation par rapport au corps (12) ainsi qu'une deuxième partie (44) coopérant avec la première tête de fixation (14) et le premier système de liaison (24) de manière à être immobilisée par rapport à la première tête de fixation (14), **caractérisé en ce que** le premier système de
liaison (24) comprend un axe de liaison (24.1), **en ce que** la première tête de fixation (14) comprend au moins une plaque (22, 22') qui présente des faces (F22, F22') parallèles entre elles ainsi qu'un trou traversant (16) logeant l'axe de liaison (24.1), **en ce que** la deuxième partie (44) de la clé (40) est une lame, configurée pour être plaquée contre l'une des faces (F22, F22') de la plaque (22), qui comprend un orifice traversant (56) configuré pour être aligné avec le trou traversant (16) de la plaque (22, 22') et loger l'axe de liaison (24.1), **en ce que** la clé (40) comprend une troisième partie (46), reliant les première et deuxième parties (42, 44), dimensionnée de manière à ce que les première et deuxième parties (42, 44) soient simultanément en contact respectivement avec la surface extérieure (26) du corps (12) et la plaque (22, 22') de la première tête de fixation (14) et **en ce que** la première tête de fixation (14) comprend une face transversale (F14) sensiblement perpendiculaire à l'axe longitudinal (A12) sur laquelle est rapportée la plaque (22) et **en ce que** la troisième partie (46) comprend une face (F46) sensiblement plane configurée pour être plaquée contre la face transversale (F14) de la première tête de fixation (14).

2. Bielle selon la revendication 1, **caractérisée en ce que** la première partie (42) présente une face (F42) configurée pour être orientée vers la surface extérieure (26) du corps (12) et plaquée contre cette dernière, la face (F42) de la première partie (42) et la surface extérieure (26) du corps (12) présentant des formes qui coopèrent entre elles de manière à immobiliser en rotation la première partie (42) de la clé (40) par rapport au corps (12).

3. Bielle selon la revendication précédente, **caractérisée en ce que** le système anti-rotation (38) comprend une pluralité de premiers crans (50) positionnés sur un tronçon (52) de la surface extérieure (26) du corps (12), orientés parallèlement à l'axe longitudinal (A12) et répartis sur toute la circonférence de la surface extérieure (26) du corps (12) et **en ce que** la face (F42) de la première partie (42) de la clé (40) présente des deuxièmes crans (54) configurés pour s'imbriquer entre les premiers crans (50) du corps (12).

4. Bielle selon la revendication précédente, **caractérisée en ce que** les deuxièmes crans (54) ont des formes complémentaires à celles des premiers crans (50).

5. Bielle selon la revendication 3 ou 4, **caractérisée en ce que** les premiers crans (50) s'étendent à partir de la face terminale transversale (28).

6. Bielle selon l'une des revendications 2 à 5, **caractérisée en ce qu'**au moins la face (F42) de la première partie (42) présente un rayon de courbure sensiblement identique à celui de la surface extérieure (26) du corps (12).

7. Aéronef comprenant au moins une bielle selon l'une des revendications précédentes

## Patentansprüche

1. Pleuelstange, die zum Verbinden eines ersten und eines zweiten Elements eingerichtet ist, mit einem Körper (12), der sich zwischen einem ersten und einem zweiten Ende (12.1, 12.2) erstreckt und eine Längsachse (A12) aufweist, einem ersten und einem zweiten Befestigungskopf (14, 18), die jeweils am Ende (12.1, 12.2) des Körpers (12) vorgesehen sind, einem ersten Verbindungssystem (24), das so eingerichtet ist, dass es den ersten Befestigungskopf (14) mit dem ersten Element verbindet, wobei der Körper (12) und der erste Befestigungskopf (14) verschieden sind und der Körper (12) an seinem ersten Ende (12.1) eine Außenfläche (26), eine quer verlaufende Endfläche (28) sowie eine Aufnahme (30) aufweist, die zumindest teilweise mit einem Gewinde versehen ist und im Bereich der quer verlaufenden Endfläche (28) mündet, wobei der erste Befestigungskopf (14) eine Verlängerung (32) aufweist, die zumindest teilweise mit einem Gewinde versehen ist, um in die Aufnahme (30) des Körpers (12) eingeschraubt zu werden, wobei die Pleuelstange (10) ein Drehsicherungssystem (38) aufweist, um den ersten Befestigungskopf (14) in Bezug auf den Körper (12) gegen Drehung zu sichern; wobei das Drehsicherungssystem (38) einen Schlüssel (40) umfasst, der rittlings auf dem ersten Befestigungskopf (14) und dem Körper (12) angeordnet ist und einen ersten Teil (42) aufweist, der mit dem Körper (12) zusammenwirkt, um in Bezug auf den Körper (12) drehfest fixiert zu werden, sowie einen zweiten Teil (44) aufweist, der mit dem ersten Befestigungskopf (14) und dem ersten Verbindungssystem (24) zusammenwirkt, um in Bezug auf den ersten Befestigungskopf (14) fixiert zu werden, **dadurch gekennzeichnet, dass** das erste Verbindungssystem (24) einen Verbindungsstift (24.1) umfasst, dass der erste Befestigungskopf (14) wenigstens eine Platte (22, 22') umfasst, die zueinander parallele Flächen (F22, F22') sowie ein Durchgangsloch (16) aufweist, das den Verbindungsstift (24.1) aufnimmt, dass der zweite Teil (44) des Schlüssels (40) eine Klinge ist, die so eingerichtet ist, dass sie gegen eine der Flächen (F22, F22') der Platte (22) gedrückt wird, und die ein Durchgangsloch (56) aufweist, das so eingerichtet ist, dass es mit dem Durchgangsloch (16) der Platte (22, 22') fluchtet und den Verbindungsstift (24.1) aufnimmt, dass der Schlüssel (40) einen dritten Abschnitt (46) umfasst, der den ersten und den zweiten Abschnitt (42, 44) verbindet und so bemessen ist, dass der erste und der zweite Abschnitt (42, 44) gleichzeitig jeweils an der Außenfläche (26) des Körpers (12) und an der Platte (22, 22') des ersten Befestigungskopfes (14) anliegen und dass der erste Befestigungskopf (14) eine Querfläche (F14) umfasst, die im Wesentlichen im rechten Winkel zur Längsachse (A12) verläuft und an der die Platte (22) angebracht ist, und dass der dritte Teil (46) eine im Wesentlichen ebene Fläche (F46) umfasst, die so eingerichtet ist, dass sie gegen die Querfläche (F14) des ersten Befestigungskopfes (14) angesetzt ist.

2. Pleuelstange nach Anspruch 1, **dadurch gekennzeichnet, dass** der erste Teil (42) eine Fläche (F42) aufweist, die so eingerichtet ist, dass sie der Außenfläche (26) des Körpers (12) zugewandt ist und gegen diese gedrückt wird, wobei die Fläche (F42) des ersten Teils (42) und die Außenfläche (26) des Körpers (12) Formen aufweisen, die miteinander zusammenwirken, um den ersten Teil (42) des Schlüssels (40) in Bezug auf den Körper (12) drehfest zu fixieren.

3. Pleuelstange nach dem vorhergehenden Anspruch, **dadurch gekennzeichnet, dass** das Drehsicherungssystem (38) eine Vielzahl von ersten Rasten (50) umfasst, die auf einem Abschnitt (52) der Außenfläche (26) des Körpers (12) angeordnet, parallel zur Längsachse (A12) ausgerichtet und über den gesamten Umfang der Außenfläche (26) des Körpers (12) verteilt sind, und dass die Fläche (F42) des ersten Teils (42) des Schlüssels (40) zweite Rasten (54) aufweist, die so eingerichtet sind, dass sie zwischen die ersten Rasten (50) des Körpers (12) eingreifen.

4. Pleuelstange nach dem vorhergehenden Anspruch, **dadurch gekennzeichnet, dass** die zweiten Rasten (54) komplementäre Formen zu denen der ersten Rasten (50) haben.

5. Pleuelstange nach Anspruch 3 oder 4, **dadurch gekennzeichnet, dass** sich die ersten Rasten (50) von der quer verlaufenden Endfläche (28) aus erstrecken.

6. Pleuelstange nach einem der Ansprüche 2 bis 5,
**dadurch gekennzeichnet, dass** zumindest die Fläche (F42) des ersten Abschnitts (42) einen Krümmungsradius aufweist, der im Wesentlichen dem der Außenfläche (26) des Körpers (12) entspricht.

7. Luftfahrzeug mit wenigstens einer Pleuelstange nach einem der vorhergehenden Ansprüche.

## Claims

1. Connecting rod configured to connect first and second elements, comprising a body (12) extending between first and second ends (12.1, 12.2) and having a longitudinal axis (A12), first and second fastening heads (14, 18) provided at each end (12.1, 12.2) of the body (12), a first connection system (24) configured to connect the first fastening head (14) to the first element, the body (12) and the first fastening head (14) being separate, the body (12) comprising, at its first end (12.1), an outer surface (26), a transverse end face (28) and an at least partially tapped housing (30) opening out at the transverse end face (28), the first fastening head (14) comprising an at least partially threaded extension (32) for screwing into the housing (30) of the body (12), the connecting rod (10) comprising an anti-rotation system (38) for rotationally immobilizing the first fastening head (14) with respect to the body (12); the anti-rotation system (38) comprising a key (40), positioned astride the first fastening head (14) and the body (12), which has a first part (42) cooperating with the body (12) so as to be rotationally immobilized with respect to the body (12) and also a second part (44) cooperating with the first fastening head (14) and the first connection system (24) so as to be immobilized with respect to the first fastening head (14), **characterized in that** the first connection system (24) comprises a connection pin (24.1), **in that** the first fastening head (14) comprises at least one plate (22, 22') which has faces (F22, F22') which are parallel to one another and also a through-hole (16) housing the connection pin (24.1), **in that** the second part (44) of the key (40) is a blade, configured to be pressed against one of the faces (F22, F22') of the plate (22), which comprises a through-orifice (56) configured to be aligned with the through-hole (16) in the plate (22, 22') and house the connection pin (24.1), **in that** the key (40) comprises a third part (46), connecting the first and second parts (42, 44), dimensioned in such a way that the first and second parts (42, 44) are simultaneously in contact with respect to the outer surface (26) of the body (12) and the plate (22, 22') of the first fastening head (14) and **in that** the first fastening head (14) comprises a transverse face (F14) substantially perpendicular to the longitudinal axis (A12) and to which the plate (22) is attached, and **in that** the third part (46) comprises a substantially plane face (F46) configured to be pressed against the transverse face (F14) of the first fastening head (14).

2. Connecting rod according to Claim 1, **characterized in that** the first part (42) has a face (F42) configured to be oriented towards the outer surface (26) of the body (12) and pressed against the latter, the face (F42) of the first part (42) and the outer surface (26) of the body (12) having shapes which cooperate with one another so as to rotationally immobilize the first part (42) of the key (40) with respect to the body (12).

3. Connecting rod according to the preceding claim, **characterized in that** the anti-rotation system (38) comprises a plurality of first teeth (50) positioned on a section (52) of the outer surface (26) of the body (12), oriented parallel to the longitudinal axis (A12) and distributed over the whole circumference of the outer surface (26) of the body (12), and **in that** the face (F42) of the first part (42) of the key (40) has second teeth (54) configured to nest between the first teeth (50) of the body (12).

4. Connecting rod according to the preceding claim, **characterized in that** the second teeth (54) have shapes complementary to those of the first teeth (50).

5. Connecting rod according to Claim 3 or 4, **characterized in that** the first teeth (50) extend from the transverse end face (28).

6. Connecting rod according to one of Claims 2 to 5, **characterized in that** at least the face (F42) of the first part (42) has a radius of curvature substantially identical to that of the outer surface (26) of the body (12).

7. Aircraft comprising at least one connecting rod according to one of the preceding claims.
